# EUROPÄISCHE PATENTANMELDUNG

(11) **EP 3 582 294 A1**
(43) Veröffentlichungstag der Anmeldung: **18.12.2019**
(21) Anmeldenummer: 19178365.3
(22) Anmeldetag: 05.06.2019
(51) Int. Cl.: H01M 2/26, H01M 10/0525

(54) **TECHNIK ZUR ERWÄRMUNG EINES TRAKTIONSENERGIESPEICHERS**

(30) Priorität: 15.06.2018 DE 102018114417
(71) Anmelder: MAN Truck & Bus SE, 80995 München (DE)
(72) Erfinder: Schydlo, Alexander, 81243 München (DE)
(74) Vertreter: v. Bezold & Partner Patentanwälte - PartG mbB

(57) **Zusammenfassung**

Ein Traktionsenergiespeicher (100) zur Speicherung elektrischer Energie in einem mittels der gespeicherten Energie angetriebenen oder antreibbaren Kraftfahrzeug wird beschrieben. Der Traktionsenergiespeicher (100) umfasst mindestens eine elektrochemische Sekundärzelle (102) mit jeweils mindestens einer Zellwand (104). Ferner umfasst der Traktionsenergiespeicher (100) mindestens ein druckdicht geschlossenes Wärmerohr (106), das dazu ausgebildet ist, Wärme von einem wärmeaufnehmenden Ende (108) des Wärmerohrs (106) zu einem vom wärmeaufnehmenden Ende (108) beabstandeten wärmeabgebenden Ende (110) des Wärmerohrs (106) unter Nutzung von Verdampfungswärme passiv zu transportieren. Das wärmeabgebende Ende (110) ist Teil der Zellwand (104) oder ragt durch die Zellwand (104) in die jeweilige Sekundärzelle (102). Ferner umfasst der Traktionsenergiespeicher (100) mindestens eine außerhalb der mindestens einen Sekundärzelle (102) angeordnete Wärmequelle (118), welche in direktem Kontakt (120) mit dem wärmeaufnehmenden Ende (108) ist.

## Beschreibung

Die vorliegende Erfindung betrifft eine Technik zur Wärmezufuhr in einem Traktionsenergiespeicher für ein elektrisch angetriebenes Kraftfahrzeug. Insbesondere sind ein beheizbarer Traktionsenergiespeicher und ein damit ausgestattetes Kraftfahrzeug beschrieben.

Der Traktionsenergiespeicher eines elektrisch angetriebenen Kraftfahrzeugs, beispielsweise eines Hybridelektrofahrzeugs (englisch: Hybrid Electric Vehicle oder HEV) oder eines Elektrofahrzeugs (englisch: Battery Electric Vehicle oder BEV) erfordert einen bestimmten Betriebstemperaturbereich oder eine Mindestbetriebstemperatur, um den optimalen Betriebszustand des Traktionsenergiespeichers gewährleisten zu können. Die Temperatur des Traktionsenergiespeichers beeinflusst dessen Ladekapazität, Wirkungsgrad und Lebensdauer. Abhängig von der Umgebungstemperatur, beispielsweise eines im Winter abgestellten Kraftahrzeugs, kann eine Temperaturerhöhung während oder vor der Nutzung des Traktionsenergiespeichers notwendig sein.

Bestehende technische Konzepte sehen vor, in kalten Wintermonaten die Batteriezellen des Traktionsenergiespeichers durch ein Kühlmittel zu beheizen. Das Dokument US 2009/0249807 A1 beschreibt ein solches wahlweises Beheizen, wobei das durch den Traktionsenergiespeicher fließende Kühlmittel in einem Sekundärkreislauf zirkuliert.

Nachteilig an den bestehenden technischen Konzepten ist der Wirkungsgrad des Gesamtsystems. Von der im Traktionsenergiespeicher chemisch gespeicherten elektrischen Energie muss ein Anteil zum Temperaturmanagement aufgebracht werden, nämlich zur Überwindung des mit dem konvektiven Wärmetauscher am Traktionsenergiespeicher und dem Kühlmittelkreislauf verbundenen hohen Wärmewiderstands. Ferner muss eine Umwälzpumpe zur Förderung des Kühlmittels angetrieben werden.

Somit besteht die Aufgabe, Exergieverluste in Kreisläufen zum Temperaturmanagement eines Traktionsenergiespeichers zu minimieren. Eine alternative oder ergänzende Aufgabe ist, einen Traktionsenergiespeicher zum Erreichen einer Mindesttemperatur schneller und/oder räumlich homogener zu erwärmen.

Diese Aufgabe oder Aufgaben werden durch eine Technik mit den Merkmalen der unabhängigen Ansprüche gelöst. Vorteilhafte Ausführungsformen und Anwendungen der Erfindung sind Gegenstand der abhängigen Ansprüche und werden in der folgenden Beschreibung unter teilweiser Bezugnahme auf die Figuren näher erläutert.

Gemäß einem Aspekt ist ein Traktionsenergiespeicher zur Speicherung elektrischer Energie in einem mittels der gespeicherten Energie angetriebenen oder antreibbaren Kraftfahrzeug bereitgestellt. Der Traktionsenergiespeicher kann mindestens eine elektrochemische Sekundärzelle mit jeweils mindestens einer Zellwand umfassen. Alternativ oder ergänzend kann der Traktionsenergiespeicher mindestens ein (beispielsweise druckdicht geschlossenes) Wärmerohr umfassen. Das Wärmerohr kann dazu ausgebildet sein, Wärme von einem wärmeaufnehmenden Ende des Wärmerohrs zu einem vom wärmeaufnehmenden Ende beabstandeten wärmeabgebenden Ende des Wärmerohrs unter Nutzung von Verdampfungswärme passiv zu transportieren. Das wärmeabgebende Ende kann Teil der Zellwand sein und/oder durch die Zellwand in die jeweilige Sekundärzelle ragen. Alternativ oder ergänzend kann der Traktionsenergiespeicher mindestens eine außerhalb der mindestens einen Sekundärzelle angeordnete Wärmequelle umfassen. Die mindestens eine Wärmequelle kann in direktem Kontakt mit dem jeweiligen wärmeaufnehmenden Ende sein.

Durch das Wärmerohr kann von außerhalb der Sekundärzellen schnell und mit geringen Exergieverluste Wärme in die jeweilige Sekundärzelle eingetragen werden. Alternativ oder ergänzend kann durch die Verdampfungswärme latente Wärme beim Übergang zwischen einem flüssigen und einem gasförmigen Aggregatzustand eines im druckdicht geschlossenen Wärmerohrs eingeschlossenen Kältemittels der jeweiligen Sekundärzelle des Traktionsenergiespeichers zugeführt werden. Ein hoher Widerstand der Wärmeleitung, wie er bei einem herkömmlichen konvektiven Wärmeaustauscher am Traktionsenergiespeicher auftritt, kann durch den direkten Wärmekontakt zwischen Wärmerohr und Sekundärzelle vermieden oder verringert werden.

Der Traktionsenergiespeicher kann auch als Batterieeinheit oder Batteriemodul bezeichnet werden.

Der Traktionsenergiespeicher kann ferner eine Steuerungseinheit (beispielsweise ein Batteriemanagementsystem) umfassen, die dazu ausgebildet ist, abhängig vom Vorzeichen einer Differenz zwischen einer vorgegeben Soll-Temperatur und einer erfassten Ist-Temperatur des Sekundärzelle wahlweise die Wärmequelle zu betrieben. Optional kann die Steuerungseinheit einen Wärmeeintrag durch das Wärmerohr in die Sekundärzelle und/oder einen Wärmeeintrag durch die Leistungsentnahme an der Sekundärzelle zur Stromspeisung der Wärmequelle bei der Regelung der Temperatur der Sekundärzelle berücksichtigen.

Ein Siedepunkt des im Wärmerohr eingeschlossenen Kältemittels kann auf die Mindestbetriebstemperatur des Traktionsenergiespeichers abgestimmt sein. Beispielsweise kann der Siedepunkt niedriger als Mindestbetriebstemperatur sein.

Die elektrochemische Sekundärzelle (auch: Sekundärzelle oder Zelle) kann dazu ausgebildet sein, die Energie oder einen Teil der Energie elektrochemisch zu speichern. Jede Zelle kann jeweils ein Paar räumlich getrennter Elektroden und einen die Elektroden zur lonenleitung verbindenden Elektrolyten umfassen. Die mindestens eine Zellwand kann die Elektroden und/oder den Elektrolyten räumlich begrenzen.

Das wärmeabgebende Ende kann in direktem Wärmekontakt mit einem Elektrolyten der jeweiligen Sekundärzelle stehen. Beispielsweise kann das wärmeabgebende Ende vom Elektrolyten der jeweiligen Sekundärzelle umgeben sein.

Das wärmeabgebende Ende kann die jeweilige Sekundärzelle durchqueren. Alternativ oder ergänzend können die Zellwand der jeweiligen Sekundärzelle und das wärmeabgebende Ende des jeweiligen Wärmerohrs integral-einstückig sein.

Das wärmeaufnehmende Ende des mindestens einen Wärmerohrs kann elektrisch leitend sein. Die Wärmequelle kann dazu angeordnet sein, einen elektrischen Heizstrom am wärmeaufnehmenden Ende zu treiben. Alternativ oder ergänzend kann das wärmeaufnehmende Ende durch die Wärmequelle induktiv beheizt oder beheizbar sein. Der elektrische Heizstrom kann ein Wirbelstrom sein.

Der Traktionsenergiespeicher kann eine Vielzahl der Sekundärzellen umfassen. Den Sekundärzellen kann jeweils mindestens eines der Wärmerohre zugeordnet sein. Die Vielzahl der Sekundärzellen kann in einem Gehäuse angeordnet sein. Die Wärmequelle kann am Gehäuse (beispielsweise außenseitig) angeordnet sein.

Der Traktionsenergiespeicher kann ferner ein Batteriemanagementsystem (BMS) umfassen. Das BMS kann dazu ausgebildet sein, eine Temperatur der mindestens einen Sekundärzelle zu erfassen und abhängig von der erfassten Temperatur einen von der mindestens einen Sekundärzelle gespeisten Strom der Wärmequelle zu steuern.

Die Wärmequelle kann eine elektrisch betriebene Heizpatrone und/oder eine elektrisch betriebene Heizfolie umfassen.

Der Traktionsenergiespeicher kann ferner einen elektrischen Leistungsanschluss umfassen, der in Energieaustausch mit einem elektrischen Antriebsstrang des Kraftfahrzeugs steht oder bringbar ist.

Gemäß einem weiteren Aspekt ist ein Kraftfahrzeug, insbesondere ein Nutzfahrzeug, bereitgestellt. Das Kraftfahrzeug umfasst einen Traktionsenergiespeicher gemäß einem Ausführungsbeispiel des vorgenannten Aspekts. Das Nutzfahrzeug kann ein Lastkraftwagen, eine Sattelzugmaschine oder ein Bus sein. Weitere Aspekte der Erfindung betreffen ein Verfahren zum Erwärmen eines Traktionsenergiespeicher mit Verfahrensschritten entsprechend der genannten Vorrichtungsmerkmale und/oder dem Bereitstellen der genannten Vorrichtungsmerkmale, sowie ein Verfahren zur Herstellung eines solchen Traktionsenergiespeichers.

Weitere Merkmale und Vorteile der Erfindung werden im Folgenden unter Bezugnahme auf die beigefügten Zeichnungen beschrieben. Es zeigen:
- Figur 1: ein schematisches Blockschaltbild einer herkömmlichen Vorrichtung zur Temperatursteuerung eines Traktionsenergiespeichers;
- Figur 2: ein schematisches Blockschaltbild eines ersten Ausführungsbeispiels eines Traktionsenerg iespeichers;
- Figur 3: eine schematische perspektivische Ansicht eines zweiten Ausführungsbeispiels eines Traktionsenergiespeichers;
- Figur 4: ein schematisches Schnittbild des zweiten Ausführungsbeispiels des Traktionsenergiespeichers; und
- Figur 5: eine schematische perspektivische Ansicht eines dritten Ausführungsbeispiels eines Traktionsenergiespeichers.

Ein Traktionsenergiespeicher, der auch als Batterieeinheit bezeichnet werden kann, braucht eine optimale Betriebstemperatur, um den optimalen Betriebszustand gewährleisten zu könne. Die Betriebstemperatur beeinflusst den Wirkungsgrad und die Lebensdauer des Traktionsenergiespeichers.

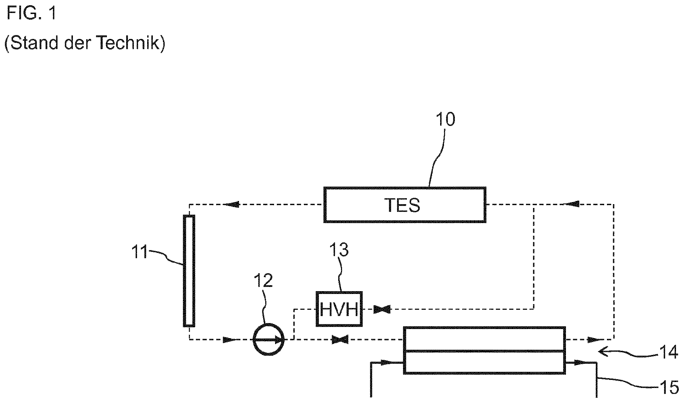

Figur 1 zeigt als ein Vergleichsbeispiel ein schematisches Blockschaltbild einer herkömmlichen Vorrichtung zur Temperatursteuerung eines Traktionsenergiespeichers 10. Die herkömmliche Vorrichtung umfasst einen elektrischen Hoch-Volt-Heizer (HVH) 13, welcher in einen Kühlmittelkreislauf eingebaut ist. Abhängig von der Umgebungstemperatur und der Temperatur des Traktionsenergiespeichers 10 wird der HVH 13 wahlweise eingeschaltet. Der vom HVH 13 erzeugte Wärmestrom wird in einem HVH-Wärmeübertrager ins Kühlmittel übertragen und durch Wärmetransportmechanismen, welche Konvektion und Wärmeleitung umfassen, vom Massestrom des Kühlmittels in den Traktionsenergiespeicher 10 übertragen. Durch diese mehrstufige Wärmeübertragung (insbesondere durch mehrfache Energietransformationen) entstehen Exergieverluste, welche den Wirkungsgrad des Gesamtsystems verringern und zur Erhöhung des Energieverbrauchs des Gesamtsystems führen.

Während Ausführungsbeispiele der Erfindung den Kühlmittelkreislauf zum Kühlen des Traktionsenergiespeichers 10 optional beibehalten können, ermöglichen die Ausführungsbeispiele eine schnellere und/oder effizientere Wärmeübertragung. Insbesondere kann der Nebenzweig des HVH 13 im Kühlmittelkreislauf entfallen.

Ausführungsbeispiele können die Technik zur Erwärmung des Traktionsenergiespeichers 10 in diesen integrieren.

Optional ist jedes Ausführungsbeispiel des Traktionsenergiespeichers in einen Kühlmittelkreislauf integrierbar, welcher einen Radiator 11, eine Umwälzpumpe 12 und eine Kältemaschine 14 umfasst. Der Traktionsenergiespeicher kann im Kühlmittelkreislauf stromabwärts der Kältemaschine 14 und stromaufwärts des Radiators 11 angeordnet sein.

Die Kältemaschine 14 kann einen Kältemittelkreislauf 15 umfassen, der über einen Wärmetauscher mit dem Kühlmittelkreislauf des Traktionsenergiespeichers 10 in Wärmeaustausch steht. Der Wärmetauscher der Kältemaschine 14 kann eingangsseitig mit einem thermischen Expansionsventil und ausgangsseitig mit einem Verdichter verbunden sein.

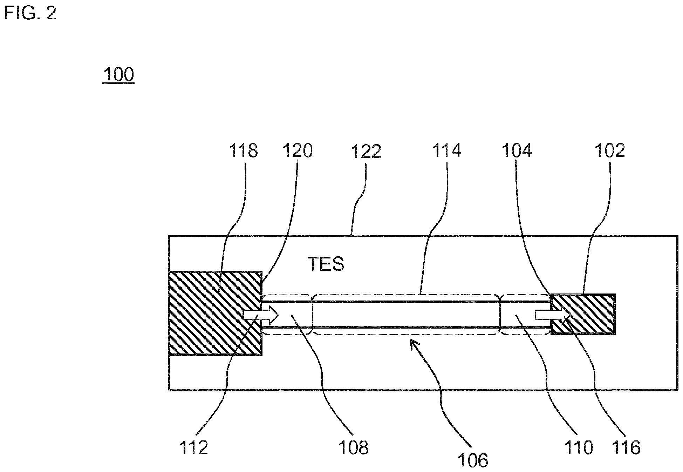

Figur 2 zeigt ein schematisches Blockschaltbild eines ersten Ausführungsbeispiels eines allgemein mit Bezugszeichen 100 bezeichneten Traktionsenergiespeichers. Jedes Ausführungsbeispiel des Traktionsenergiespeichers 100 kann, beispielsweise nach Entfallen des Nebenzweigs des HVH 13, im Kühlmittelkreislauf der Figur 1 beim Bezugszeichen 10 eingesetzt werden.

Der Traktionsenergiespeicher 100 ist zur Speicherung elektrischer Energie in einem mittels der gespeicherten Energie angetriebenen oder antreibbaren Kraftfahrzeug ausgebildet. Der Traktionsenergiespeicher 100 umfasst mindestens eine elektrochemische Sekundärzelle 102 mit jeweils mindestens einer Zellwand 104. Ferner umfasst der Traktionsenergiespeicher 100 mindestens ein druckdicht geschlossenes Wärmerohr 106, das dazu ausgebildet ist, Wärme von einem wärmeaufnehmenden Ende 108 des Wärmerohrs 106 zu einem vom wärmeaufnehmenden Ende 108 beabstandeten wärmeabgebenden Ende 110 des Wärmerohrs 106 unter Nutzung von Verdampfungswärme passiv zu transportieren. Das wärmeabgebende Ende 110 ist Teil der Zellwand 104 oder ragt durch die Zellwand 104 in die jeweilige Sekundärzelle 102.

Im druckdicht geschlossenen Wärmerohr 106 ist ein Kältemittel enthalten. Das wärmeaufnehme Ende 108 fungiert als Verdampfer des Kältemittels, wobei die latente Wärme durch die Wärmeleitung 112 oder induktiv zugeführt wird. Über eine adiabatische Zone 114 des Wärmerohrs 106 wird die zugeführte Wärme ins Innere des Traktionsenergiespeichers 100 zu der mindestens einen Sekundärzelle 102 transportiert. Am wärmabgebenden Ende 110 wird die transportierte Wärme der jeweiligen Sekundärzelle 102 zugeführt. Das wärmabgebende Ende 110 fungiert dabei als Kondensator des im Wärmerohrs 106 enthaltenen Kältemittels.

Der Traktionsenergiespeicher 100 umfasst mindestens eine außerhalb der mindestens einen Sekundärzelle 102 angeordnete Wärmequelle 118, die in direktem Kontakt 120 mit dem wärmeaufnehmenden Ende 108 steht. Der direkte Kontakt 120 kann durch einen direkten Wärmekontakt zur Wärmeleitung oder ein elektromagnetisches Nahfeld zur Induktion von Wirbelströmen am wärmeaufnehmenden Ende 108 realisiert sein.

Alle Sekundärzellen 102 können in einem Gehäuse 122 angeordnet sein. Die Wärmequelle 118 kann (beispielsweise innenseitig oder außenseitig) am Gehäuse 122 befestigt sein.

Die elektrische Leistung für die Umwälzpumpe 12 kann somit beim Erwärmen des Traktionsenergiespeichers entfallen. Das heißt, gegenüber einer herkömmlichen Heizung mittels des herkömmlichen HVH 13 muss keine zusätzliche elektrische Antriebsenergie für die Umwälzpumpe beim Erwärmen des Traktionsenergiespeichers 100 aufgebracht werden. Diese herkömmliche Antriebsleistung der elektrischen Umwälzpumpe 12 ist von den inneren Druckverlusten des Kühlmittelkreislaufs sowie vom Wirkungsgrad der Umwälzpumpe 12 abhängig. Dadurch kann der Exergieverlust reduziert und die Anzahl an Energietransformationen im Heizungskreislauf minimiert werden. Insbesondere kann der Wirkungsgrad des Gesamtsystems erhöht und dessen Energieverbrauch reduziert werden.

Jedes Ausführungsbeispiel des Traktionsenergiespeichers 100 kann in Hybridelektrofahrzeugen (HEV) oder Batterieelektrofahrzeugen (BEV) einsetzbar sein.

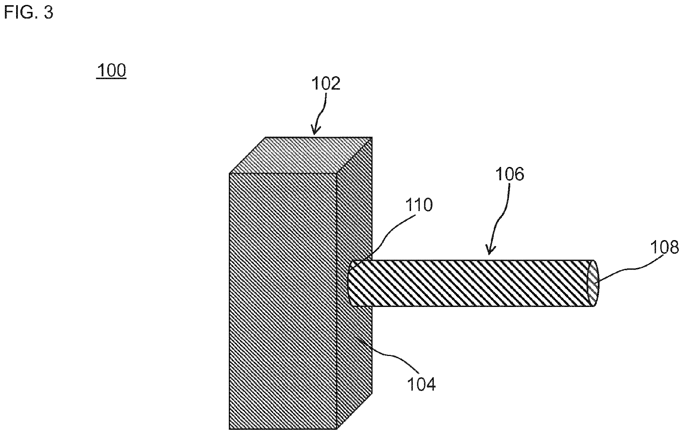

Figur 3 zeigt eine schematische perspektivische Ansicht eines zweiten Ausführungsbeispiels eines Traktionsenergiespeichers 100. Das zweite Ausführungsbeispiel kann als Weiterbildung des ersten Ausführungsbeispiels ausgeführt sein. Beispielsweise kann eines oder mehrere der mit Bezugnahme auf Figur 3 beschriebenen Merkmale im ersten Ausführungsbeispiel der Figur 2 ein entsprechendes oder alternatives Merkmal ergänzen oder ersetzen. Hierzu sind austauschbare oder äquivalente Merkmale mit denselben Bezugszeichen versehen.

Das Wärmerohr 106 ist mit seinem wärmabgebenden Ende 110 in der Sekundärzelle 102 integriert. Beispielsweise sind eine gasdichte Einfassung des Wärmerohrs 106 und die dem Wärmerohr 106 zugewandte Zellwand 104 der Sekundärzelle 102 integral-einstückig ausgeführt, beispielsweise aus demselben metallischen Werkstoff. Dadurch kann neben einem nahezu exergieerhaltenden Wärmetransport innerhalb des Wärmerohrs 106 aufgrund der adiabatischen Zone 114 auch am wärmabgebenden Ende 110 der Exergieverlust durch die Wärmeleitung 116 minimiert sein.

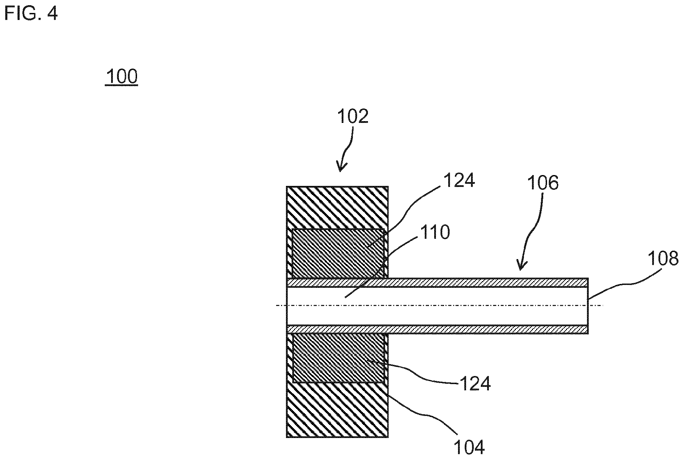

Figur 4 zeigt eine schematische Schnittansicht eines Ausführungsbeispiels, beispielsweise des zweiten Ausführungsbeispiels der Figur 3. Die gezeigte Schnittebene umfasst eine Längsachse des Wärmerohrs 106 und ist zu dieser parallel.

Das Wärmerohr 106 ist zumindest mit seinem wärmeabgebenden Ende 110 in die einzelne Sekundärzelle 102 (welche auch als Batteriezelle bezeichnet werden kann) eingebaut. Das wärmabgebende Ende 110 ragt durch die Zellwand 104 ins Innere der Sekundärzelle 102. Vorzugsweise durchquert das Wärmerohr 106 die Sekundärzelle 102. Das heißt, das wärmeabgebende Ende 110 erstreckt sich von der vom Wärmerohr 106 durchquerten Zellwand 104 bis zur der Zellwand 104 gegenüberliegenden Zellwand der Sekundärzelle 102.

Das in die Sekundärzelle 102 ragende wärmabgebende Ende 110 des Wärmerohrs 106 steht in direktem Wärmekontakt mit einem Elektrolyten 124 innerhalb der Sekundärzelle 102. Durch die direkte in die Sekundärzelle 102 integrierte thermische Verbindung ist eine große Wärmeübertragungsfläche für die Wärmeleitung 116 erreicht und ermöglicht einen effizienteren und schnelleren Wärmetransport.

In jedem der vorgenannten Ausführungsbeispiele ist die Anzahl der Wärmerohre 106 und/oder deren Kapazität (beispielsweise deren Durchmesser) zum Wärmetransport veränderbar, insbesondere in Abhängigkeit von einer Anordnungsstruktur und/oder einer Dichte der im Traktionsenergiespeicher 100 angeordneten Sekundärzellen 102.

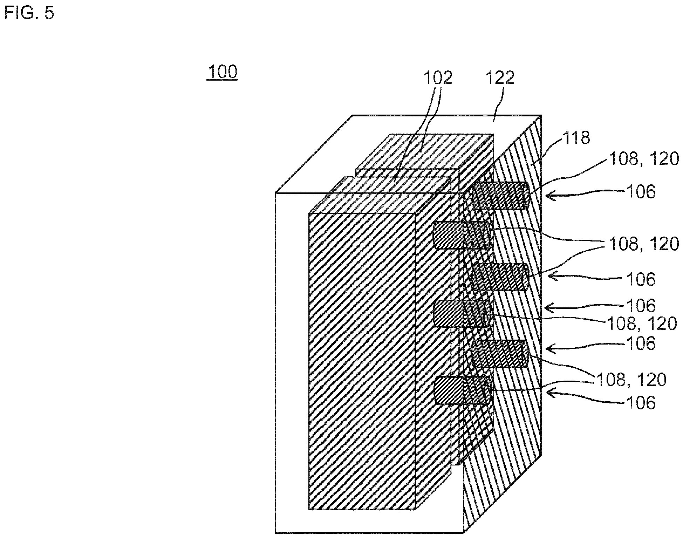

Figur 5 zeigt ein drittes Ausführungsbeispiel des Traktionsenergiespeichers 100. Der Traktionsenergiespeicher 100 umfasst mindestens zwei elektrochemische Sekundärzellen 102 in einem Gehäuse 122. Jede Sekundärzelle 102 ist mittels eines oder mehrere Wärmerohre 106 (im in Figur 5 gezeigten dritten Ausführungsbeispiel beispielsweise mit jeweils drei Wärmerohren 106) zur Wärmeübertragung mit einer am Gehäuse 122 angeordneten Wärmequelle 118 verbunden.

Im in Figur 5 gezeigten Ausführungsbeispiel umfasst die Wärmequelle 118 eine direkt auf den Traktionsenergiespeicher 100 (genauer: auf mindestens eine Oberfläche des Gehäuses 122) geklebte Heizfolie. Der Wärmetransport von der Heizfolie 118 durch die Kontaktfläche der jeweiligen wärmeaufnehmenden Enden 108 der Wärmerohre 106 in die jeweiligen Sekundärzellen 102 ist somit energieeffizient. Ferner ist ein elektrischer Kurzschluss oder sind Kriechströme zwischen der elektrischen Wärmequelle 118 und den elektrochemischen Reaktionen innerhalb der einzelnen Sekundärzellen 102 durch die räumliche Trennung mittels der Wärmerohre 106 ausschließbar.

Jedes Ausführungsbeispiel kann eine indirekte Wärmeübertragung zwischen einer Wärmequelle 118 (beispielsweise einem Heizkörper) und eine Wärmesenke (beispielsweise einer Sekundärzelle 102) im Traktionsenergiespeicher 100 (beispielsweise in einer Batterieeinheit) mittels eines oder mehrerer Wärmerohre realisieren. Der Wärmestrom aus der Wärmequelle 118 kann durch den direkten Kontakt 120 mit dem mindestens einen Wärmerohr 106 zum Kältemittel im Wärmerohr 106 übertragen werden, beispielsweise durch eine Kontaktfläche oder durch elektrische Induktion. Durch Verdampfen des Kältemittels am wärmeaufnehmenden Ende 108 und Kondensation am wärmeabgebenden Ende 110 wird ein fühlbarer Wärmestrom und ein latenter Wärmestrom an der Sekundärzelle 102 (d.h., der Wärmesenke) durch den Wärmetransport des jeweiligen Wärmerohrs 106 abgegeben.

In jedem Wärmerohr 106 kann am wärmeaufnehmenden Ende 108 das Kältemittel in einer Verdampfungszone verdampfen und in der adiabatischen Zone 114 durch Wärme- und Stofftransport transportiert werden, um am wärmeabgebenden Ende 110 in einer Kondensationszone zu kondensieren. Der Wärmetransport zwischen den einzelnen Komponenten, d.h. der Wärmequelle 118 und dem Wärmerohr 106 (am wärmeaufnehmenden Ende 108) bzw. zwischen dem Wärmerohr 106 und der Sekundärzelle 102 (am wärmeabgebenden Ende 110) kann durch einen Wärmeleitungsmechanismus erfolgen, beispielsweise zwischen Kontaktflächen der jeweiligen Festkörper oder innerhalb eines integral-einstückig ausgeführten Festkörpers.

Während die Erfindung anhand funktioneller und struktureller Merkmale für einen Vorrichtungsaspekt beschrieben ist, betrifft die Erfindung auch einen entsprechenden Verfahrensaspekt, insbesondere ein Verfahren zur Herstellung eines solchen Traktionsenergiespeichers.

Für ein Verfahren zur indirekten Erwärmung eines Traktionsenergiespeichers (beispielsweise ohne Einsatz eines Kühlmittelkreislaufs bei der Erwärmung) können mindestens ein Wärmerohr und eine Wärmequelle bereitgestellt werden. Das wärmeaufnehmende Ende des Wärmerohrs kann mit der Wärmequelle zur Aufnahme von Wärme zusammenwirken oder in Wirkverbindung gebracht werden. Zum Wärmetransport in mindestens eine Sekundärzelle des Traktionsenergiespeicher kann das wärmeabgebende Ende des Wärmerohrs mit der Sekundärzelle zusammenwirken oder in Wirkverbindung gebracht werden.

In jedem Aspekt kann die mindestens eine Wärmequelle 118 in oder am Traktionsenergiespeicher 100 eingebaut oder integriert sein. Beispiele für die Wärmequelle 118 umfassen Heizpatronen, Heizfolien und Heizkörper. Jede Wärmequelle 118 kann in thermischem Kontakt mit einem oder mehreren Wärmerohren 106 sein, die als Zwischen-Wärmeübertrager fungieren und den Wärmestrom an die mindestens eine Sekundärzelle 102 als Wärmesenke im Traktionsenergiespeicher 100 leiten.

Optional ist der Wärmetransport zwischen den einzelnen Komponenten durch Wärmeleitung realisiert. Die Wärmeleitung kann ein dominanter Wärmetransportmechanismus zwischen der Wärmequelle 118 und der beheizten Sekundärzelle 102 sein.

Durch die indirekte Beheizung der Sekundärzellen über die Wärmerohre können elektrische Komponenten der Wärmequelle und der Sekundärzelle gegen Kurzschlüsse und Kriechströme räumlich getrennt sei.

Durch die Beheizung mittels direkt kontaktierenden und/oder integral-einstückig ausgeführten Wärmerohren können Exergieverluste im Heizungskreislauf reduziert werden. Alternativ oder zusätzlich kann durch diese Beheizung die Zahl der Energietransformationen im Heizungskreislauf verringert werden. So kann die indirekte Beheizung der Sekundärzellen über die Wärmerohre zur Reduzierung des Energieverbrauchs des Traktionsenergiespeichers als primärer Energiequelle führen. Alternativ oder ergänzend kann diese Beheizung eine Reichweite des Kraftfahrzeugs vergrößern und/oder Betriebskosten des Kraftfahrzeugs reduzieren. Ferner können durch Wegfall des HVH-Nebenzweigs die Herstellungskosten eines elektrischen Antriebstrangs gesenkt werden.

In jedem Ausführungsbeispiel kann ein Fluid im Wärmerohr als organisches oder anorganisches Kältemittel enthalten sein.

Das Verfahren zur Erwärmung und/oder ein jedes Ausführungsbeispiel des Traktionsenergiespeichers kann in einem Personenkraftwagen (PKW) oder einem Nutzfahrzeug (insbesondere einem Lastkraftwagen, einer Sattelzugmaschine oder einem Bus) implementiert sein. Der Traktionsenergiespeicher kann zum elektrischen Antrieb eines batterieelektrischen Fahrzeugs (BEV) und/oder eines Hybridelektrokraftfahrzeug (HEV) ausgebildet sein.

Obwohl die Erfindung in Bezug auf exemplarische Ausführungsbeispiele beschrieben worden ist, ist es für den Fachmann ersichtlich, dass verschiedene Änderungen vorgenommen werden können und Äquivalente als Ersatz verwendet werden können. Ferner können viele Modifikationen vorgenommen werden, um eine bestimmte Situation oder ein bestimmtes Material an die Lehre der Erfindung anzupassen. Folglich ist die Erfindung nicht auf die vorstehenden Ausführungsbeispiele beschränkt, sondern umfasst alle Ausführungsbeispiele, die in den Bereich der beigefügten Patentansprüche fallen.

### Bezugszeichenliste

- 100: Traktionsenergiespeicher
- 102: Sekundärzelle
- 104: Zellwand der Sekundärzelle
- 106: Wärmerohr
- 108: Wärmeaufnehmendes Ende des Wärmerohrs
- 110: Wärmeabgebendes Ende des Wärmerohrs
- 112: Wärmeleitung von Wärmequelle zu Wärmerohr
- 114: Adiabatische Zone des Wärmerohrs
- 116: Wärmeleitung von Wärmerohr zu Sekundärzelle
- 118: Wärmequelle
- 120: Direkter Kontakt zwischen Wärmequelle und wärmeaufnehmendem Ende
- 122: Gehäuse des Traktionsenergiespeichers
- 124: Elektrolyt

## Patentansprüche

1. Traktionsenergiespeicher (100) zur Speicherung elektrischer Energie in einem mittels der gespeicherten Energie angetriebenen oder antreibbaren Kraftfahrzeug, umfassend:
- mindestens eine elektrochemische Sekundärzelle (102) mit jeweils mindestens einer Zellwand (104);
- mindestens ein druckdicht geschlossenes Wärmerohr (106), das dazu ausgebildet ist, Wärme von einem wärmeaufnehmenden Ende (108) des Wärmerohrs (106) zu einem vom wärmeaufnehmenden Ende (108) beabstandeten wärmeabgebenden Ende (110) des Wärmerohrs (106) unter Nutzung von Verdampfungswärme passiv zu transportieren, wobei das wärmeabgebende Ende (110) Teil der Zellwand (104) ist oder durch die Zellwand (104) in die jeweilige Sekundärzelle (102) ragt; und
- mindestens eine außerhalb der mindestens einen Sekundärzelle (102) angeordnete Wärmequelle (118), welche in direktem Kontakt (120) mit dem wärmeaufnehmenden Ende (108) ist.

2. Traktionsenergiespeicher (100) nach Anspruch 1, wobei das wärmeabgebende Ende (110) die jeweilige Sekundärzelle (102) durchquert.

3. Traktionsenergiespeicher (100) nach Anspruch 1 oder 2, wobei das wärmeabgebende Ende (110) in direktem Wärmekontakt mit einem Elektrolyten (124) der jeweiligen Sekundärzelle (102) ist.

4. Traktionsenergiespeicher (100) nach einem der Ansprüche 1 bis 3, wobei die Zellwand (104) der Sekundärzelle (102) und das wärmeabgebende Ende (110) des jeweiligen Wärmerohrs (106) integral-einstückig sind.

5. Traktionsenergiespeicher (100) nach einem der Ansprüche 1 bis 4, wobei das wärmeaufnehmende Ende (108) des Wärmerohrs (102) elektrisch leitend ist, und die Wärmequelle (118) dazu angeordnet ist, einen elektrischen Heizstrom am wärmeaufnehmende Ende (108) zu treiben.

6. Traktionsenergiespeicher (100) nach einem der Ansprüche 1 bis 5, wobei das wärmeaufnehmende Ende (108) durch die Wärmequelle (118) induktiv beheizt oder beheizbar ist.

7. Traktionsenergiespeicher (100) nach einem der Ansprüche 1 bis 6, wobei einer Vielzahl der Sekundärzellen (102) jeweils mindestens eines der Wärmerohre (106) zugeordnet ist.

8. Traktionsenergiespeicher (100) nach Anspruch 7, wobei die Vielzahl der Sekundärzellen (102) in einem Gehäuse (122) angeordnet ist, und die Wärmequelle (118) am Gehäuse (122) angeordnet ist.

9. Traktionsenergiespeicher (100) nach einem der Ansprüche 1 bis 8, ferner ein Batteriemanagementsystem, BMS, umfassend, das dazu ausgebildet ist, eine Temperatur der mindestens einen Sekundärzelle (102) zu erfassen und abhängig von der erfassten Temperatur einen von der mindestens einen Sekundärzelle (102) gespeisten Strom der Wärmequelle (118) zu steuern.

10. Traktionsenergiespeicher (100) nach einem der Ansprüche 1 bis 9, wobei die Wärmequelle (118) eine elektrisch betriebene Heizpatrone und/oder eine elektrisch betriebene Heizfolie umfasst.

11. Traktionsenergiespeicher (100) nach einem der Ansprüche 1 bis 10, ferner einen elektrischen Leistungsanschluss umfassend, der in Energieaustausch mit einem elektrischen Antriebsstrang des Kraftfahrzeugs steht oder bringbar ist.

12. Kraftfahrzeug, insbesondere ein Nutzfahrzeug, umfassend einen Traktionsenergiespeicher (100) gemäß einem der Ansprüche 1 bis 11.
